# EUROPÄISCHE PATENTSCHRIFT

(11) **EP 1 783 542 B1**
(45) Veröffentlichungstag und Bekanntmachung des Hinweises auf die Patenterteilung: **23.09.2009**
(21) Anmeldenummer: 06021793.2
(22) Anmeldetag: 18.10.2006
(51) Int. Cl.: G02F 1/13357, B60Q 3/04, B60K 37/02, G02B 6/00

(54) **Kraftfahrzeug und Anzeigevorrichtung**
Motor vehicle and display device
Vehicule automobile et dispositif d'affichage

(30) Priorität: 29.10.2005 DE 102005051965
(43) Veröffentlichungstag der Anmeldung: 09.05.2007
(73) Patentinhaber: GM Global Technology Operations, Inc., Detroit, MI 48265-3000 (US)
(72) Erfinder: Brandt, Peter, 63739 Aschaffenburg (DE); Charle, Heiko, 65428 Rüsselsheim (DE)
(74) Vertreter: Daniel, Ulrich W.P.

(56) Entgegenhaltungen:
- EP-A- 1 296 094
- EP-A1- 0 344 968
- DE-A1- 19 915 209
- GB-A- 2 156 292

## Beschreibung

Die Erfindung betrifft ein Kraftfahrzeug mit einer Anzeigevorrichtung und eine Anzeigevorrichtung für ein Kraftfahrzeug.

Die zunehmende Integration lichtemittierender Mittel und relativ hoch auflösender Anzeigevorrichtungen in Kraftfahrzeugen führt insbesondere im Nachtdesign zu unerwünschten Spiegelungen des mit der Anzeigevorrichtung angezeigten Anzeigeinhalts an reflektierenden Oberflächen wie insbesondere der Windschutzscheibe. Hochauflösende Anzeigevorrichtungen sind beispielsweise am Armaturenbrett des Kraftfahrzeugs befestigte Flüssigkristallbildschirme. Die Spiegelung des Anzeigeinhalts auf der Windschutzscheibe kann jedoch die das Kraftfahrzeug lenkende Person irritieren, wodurch die Sicherheit eingeschränkt werden kann.

Um eine Spiegelung des Anzeigeninhalts auf der Windschutzscheibe zu verhindern, umfassen die Armaturenbretter gängiger Kraftfahrzeuge eine Hutze, das heißt eine optische Blende, die Licht der Anzeigevorrichtung in Richtung Windschutzscheibe abgeschottet. Eine solche Lösung schränkt jedoch das Design eines Kraftfahrzeuges ein. in der DE 199 152 09 A1 ist eine Vorrichtung, die zur flächigen Hinterleuchtung einer Anzeige dient, offenbart. Die Vorrichtung umfasst eine Lichtleiterplatte, an der an der Anzeige zugewandten Seitenfläche Mikrostrukturen in der Form von trapez- oder rechteckförmigen Erweiterungen zur Auskopplung des Lichts aus der Lichtleiterplatte angeordnet sind.

GB-A-2 156 292 offenbart ein Fahrzeug gemäß dem Oberbegriff von Anspruch 1 bzw. eine Anzeigevorrichtung gemäß dem Oberbegriff von Anspruch 7.

Die Aufgabe der vorliegenden Erfindung ist es, ein Kraftfahrzeug mit einem im Wesentlichen hutzenlosen Armaturenbrett, an das eine Anzeigevorrichtung angeordnet ist, derart auszuführen, dass eine durch die Anzeigevorrichtung potenzielle Spiegelung auf der Windschutzscheibe zumindest verringert wird. Eine weitere Aufgabe der vorliegenden Erfindung ist es, eine Anzeigevorrichtung anzugeben, die eine Spiegelung ihres Anzeigeinhalts auf der Windschutzscheibe bei Einbau in ein im Wesentlichen hutzenloses Armaturenbrett zumindest verringert.

Die Aufgabe der Erfindung wird gelöst durch ein Kraftfahrzeug gemäß Anspruch 1. Die Anzeigevorrichtung umfasst die Anzeige, beispielsweise einen Flüssigkristallbildschirm, und die Hintergrundbeleuchtung. Die der Rückseite der Anzeige zugewandte Oberfläche des Lichtleiters ist mit einer asymmetrischen Mikrostruktur versehen. Die asymmetrische Mikrostruktur lenkt das zum Hinterleuchten der Anzeige vorgesehene Licht in eine definierte Vorzugsrichtung derart aus, dass das Licht einerseits möglichst auf die Augenellipse einer das Kraftfahrzeug lenkenden Person ausgerichtet ist und andererseits möglichst keine Komponente in Richtung der Windschutzscheibe hat. Der Öffnungswinkel des austretenden Lichts ist ferner entsprechend dem Einblickwinkel auf die Anzeige der das Kraftfahrzeug lenkenden Person angepasst. Somit können störende Spiegelungen auf der Windschutzscheibe verhindert werden, obwohl das Armaturenbrett keine optische Blende aufweist, die Licht der Anzeigevorrichtung in Richtung der Windschutzscheibe abschottet.

Eine Lichtemission in Richtung der Windschutzscheibe kann zudem verringert werden, wenn gemäß einer Ausführungsform des erfindungsgemäßen Kraftfahrzeuges dessen Anzeigevorrichtung einen flächenhaften Reflektor aufweist, der an der der Rückseite der Anzeige abgewandten Seite des Lichtleiters derart angeordnet und/oder ausgebildet ist, dass er vom Lichtleiter reflektierendes Licht weg von der Windschutzscheibe in den Lichtleiter zurück wirft. Die dem Lichtleiter zugewandte Fläche des Reflektors ist beispielsweise plan und schließt mit der der Rückseite der Anzeige abgewandten Seite des Lichtleiters einen Winkel ein, der so gewählt, dass der Reflektor Licht weg von der Windschutzscheibe lenkt. Der Reflektor kann aber auch auf der dem Lichtleiter zugewandten Seite Partialflächen aufweisen, die jeweils mit der der Rückseite der Anzeige abgewandten Seite des Lichtleiters einen Winkel einschließen. Dieser Winkel ist ebenfalls derart gewählt, dass der Reflektor Licht weg von der Windschutzscheibe ablenkt.

Nach einer weiteren Ausführungsform des erfindungsgemäßen Kraftfahrzeuges ist die Transmissionseigenschaft der Anzeige durch eine Reibrichtung ihrer Oberfläche derart ausgerichtet, dass der Bereich des minimalen Kontrasts und der dazugehörigen Transmission in Richtung der Windschutzscheibe ausgerichtet ist. Dadurch kann ebenfalls in Richtung der Windschutzscheibe gerichtetes Licht reduziert werden.

Die Aufgabe der Erfindung wird auch gelöst durch eine Anzeigevorrichtung zum Einbau in ein Armaturenbrett eines Kraftfahrzeuges gemäß Anspruch 7. Mit einer solchen Anzeigevorrichtung ist es möglich, das Armaturenbrett im Wesentlichen hutzenlos auszuführen.

Durch die erfindungsgemäße Anzeigevorrichtung ist es möglich, aufgrund der Integration der asymmetrischen Mikrostruktur in die Lichtleiteroberfläche das zur Auskopplung der Lichtstrahlen der Anzeige vorgesehene Licht einzugrenzen und den Abstrahlwinkel derart zu verringern, sodass möglichst kein Licht in Richtung der Windschutzscheibe gerichtet ist. Dies wird beispielsweise durch eine gerichtete, diffuse Lichtlenkung durch keilförmige Auslegung der Lichtleiterstruktur mit einem eventuell zusätzlichen hinterlegten Reflektor erreicht. Außerdem ist es möglich, den Anzeigewinkel derart festzulegen, dass der Bereich mit der größten Transmission von der Windschutzscheibe abweist.

Ausführungsbeispiele der Erfindung sind exemplarisch in den beigefügten schematischen Figuren dargestellt. Es zeigen:
- Fig. 1: Einen Personenkraftwagen,
- Fig. 2: einen Teil des in der Fig. 1 dargestellten Personenkraftwagen in geschnittener Darstellung,
- Fig. 3: eine Anzeigevorrichtung,
- Fig. 4: einen Lichtleiter und einen Reflektor der in der Fig. 3 gezeigten Anzeigevorrichtung,
- Fig. 5: eine Reibrichtung der Anzeigeoberfläche der Anzeigevorrichtung und
- Fig. 6: einen alternativen Reflektor.

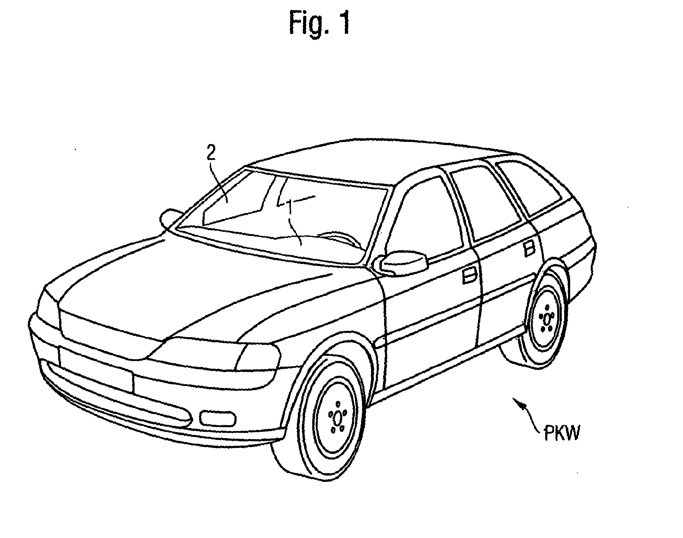

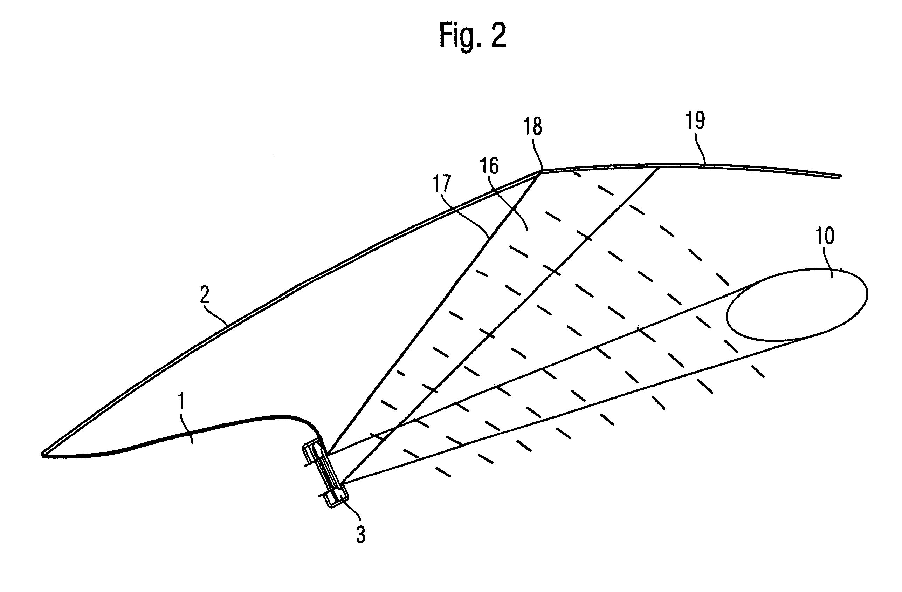

Die Fig. 1 zeigt als Beispiel eines Kraftfahrzeuges einen Personenkraftwagen PKW mit einem Armaturenbrett 1 und einer Windschutzscheibe 2. An dem Armaturenbrett 1 ist eine in den Fig. 2 bis 5 näher dargestellte Anzeigevorrichtung 3 angeordnet. Die Anzeigevorrichtung 3 ist derart ausgerichtet, dass eine in den Figuren nicht näher dargestellte und den Personenkraftwagen PKW lenkende Person im Wesentlichen rechtwinklig auf eine Anzeigenoberfläche der Anzeigevorrichtung 3 blicken kann. Dies ist in der Fig. 2 dargestellt, wobei eine in der Fig. 2 gezeigte Ellipse mit dem Bezugszeichen 10 die Positionen der Augenellipsen verschiedener, auf einem nicht näher dargestellten Fahrersitz des Personenkraftwagens PKW sitzender Personen darstellt.

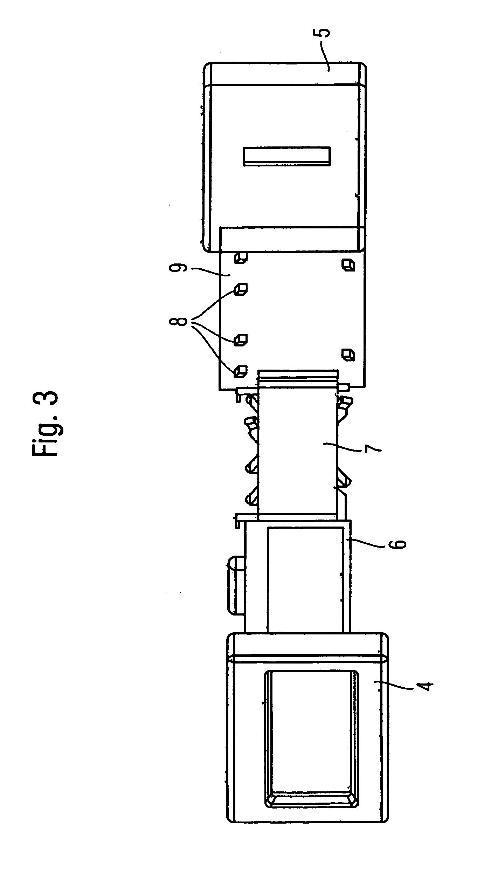

Im Falle des vorliegenden Ausführungsbeispieles umfasst die Anzeigevorrichtung 3 ein in der Fig. 3 dargestelltes zweiteiliges Gehäuse 4, 5 wobei das Teilgehäuse 5 die Rückwand der Anzeigevorrichtung 3 darstellt. Die Anzeigevorrichtung 3 umfasst als Anzeige einen Flüssigkristallbildschirm 6, der in nicht dargestellter Weise von einer Steuerelektronik des Personenkraftwagens PKW angesteuert wird. Der Flüssigkristallbildschirm 6 wird mit einer Hintergrundbeleuchtung hinterleuchtet, die einen Lichtleiter 7 und Leuchtdioden 8 aufweist. Der Lichtleiter 7 ist flächenhaft ausgebildet und an der Rückseite des Flüssigkristallbildschirmes 6 angeordnet. Im Falle des vorliegenden Ausführungsbeispieles koppeln die Leuchtdioden 8 im montierten Zustand der Anzeigevorrichtung 3 Licht seitlich in den Lichtleiter 7 ein und sind auf einer als Reflektor 9 ausgebildeten lichtreflektierenden Platte befestigt. Die Leuchtdioden 8 werden in nicht dargestellter Weise über elektrische Leitungen von der nicht dargestellten Steuerelektronik des Personenkraftwagens PKW angesteuert.

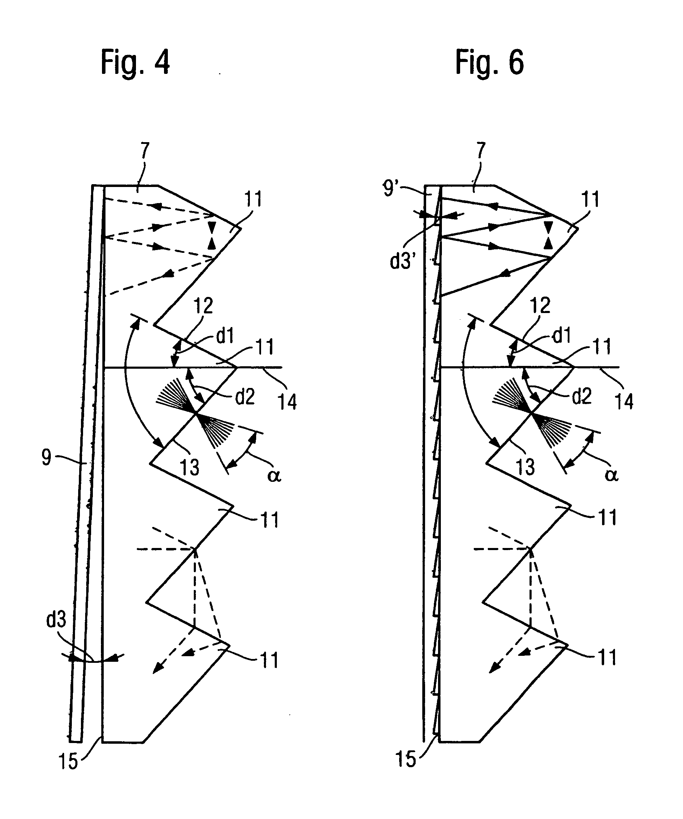

Wie es aus der Fig. 2 ersichtlich ist, handelt es sich bei dem Armaturenbrett 1 um ein hutzenloses Armaturenbrett 1, d.h. das Armaturenbrett 1 umfasst keine optische Blende, die ein Anstrahlen der im Betrieb befindlichen Anzeigevorrichtung 3 auf die Windschutzscheibe 2 verhindern würde. Damit jedoch die Anzeigevorrichtung 3 möglichst keine Lichtstrahlen auf die Windschutzscheibe 2 wirft, wodurch ein Spiegelbild auf der Windschutzscheibe 2 entstehen könnte, hat die dem Flüssigkristallbildschirm 6 zugewandte Seite des Lichtleiter 7 eine in der Fig. 4 dargestellte Oberflächenstruktur.

Im Falle des vorliegenden Ausführungsbeispiels weist die dem Flüssigkristallbildschirm 6 zugewandte Seite des Lichtleiters 7 mehrere gleichmäßig angeordnete sägezahnförmige Prismen 11 auf. Die einzelnen Prismen 11 sind derart asymmetrisch strukturiert, dass sie in den Lichtleiter 7 eingekoppeltes Licht in eine vorgegebene Vorzugsrichtung lenken, wodurch der Öffnungswinkel α der Hintergrundbeleuchtung der Anzeigevorrichtung 3 einerseits eingeschränkt und andererseits möglichst kein Licht in Richtung der Windschutzscheibe 2 gelenkt wird. Dies wird erreicht, indem die Seitenflächen 12, 13 der einzelnen Prismen 11 unterschiedliche Winkel d1, d2 bezüglich einer Fläche 14, die rechtwinklig zu der vom Flüssigkeitskristallbildschirm 6 abgewandten Seite 15 des Lichtleiters 7 ausgerichtet ist, haben. Die den Seitenflächen 12 der Prismen 11 zugeordneten Winkel d1 sind dabei kleiner als die den Seitenflächen 13 der Prismen 11 zugeordneten Winkel d2. Dadurch wird es ermöglicht, dass aus dem Lichtleiter 7 austretendes Licht nicht nur in ihrem Austrittswinkel α eingeschränkt werden, sondern Licht, das aus den Seitenflächen 12 der Prismen 11 ausgekoppelt wird, größtenteils wieder vom Lichtleiter 7 eingefangen wird. Somit ist es möglich, dass das von der Anzeigevorrichtung 3 abgestrahlte Licht mit einem derartigen Austrittwinkel abgestrahlt wird und einen in der Fig. 2 strichliert dargestellten Bereich 16 abdeckt, der nicht auf die Windschutzscheibe 2 gerichtet ist. Im Falle des vorliegenden Ausführungsbeispiels wird der Bereich 16 von einer Fläche 17 begrenzt, die den Personenkraftwagen PKW in etwa im Grenzbereich 18, in dem die Windschutzscheibe 2 den Formhimmel 19 des Personenkraftwagens PKW trifft.

Um im Falle des vorliegenden Ausführungsbeispiels das aus dem Lichtleiter 7 für das Hinterleuchten des Flüssigkristallbildschirmes 6 vorgesehene ausgekoppelte Licht verbessert weg von der Windschutzscheibe 2 zu lenken, ist die dem Lichtleiter 7 zugewandte Seite des Reflektors 9 plan, jedoch mit einem spitzen Winkel d3 bezüglich des Flüssigkeitskristallbildschirms 6 abgewandten Seite 15 des Lichtleiters 7 ausgerichtet. Dies ist ebenfalls in der Fig. 4 gezeigt.

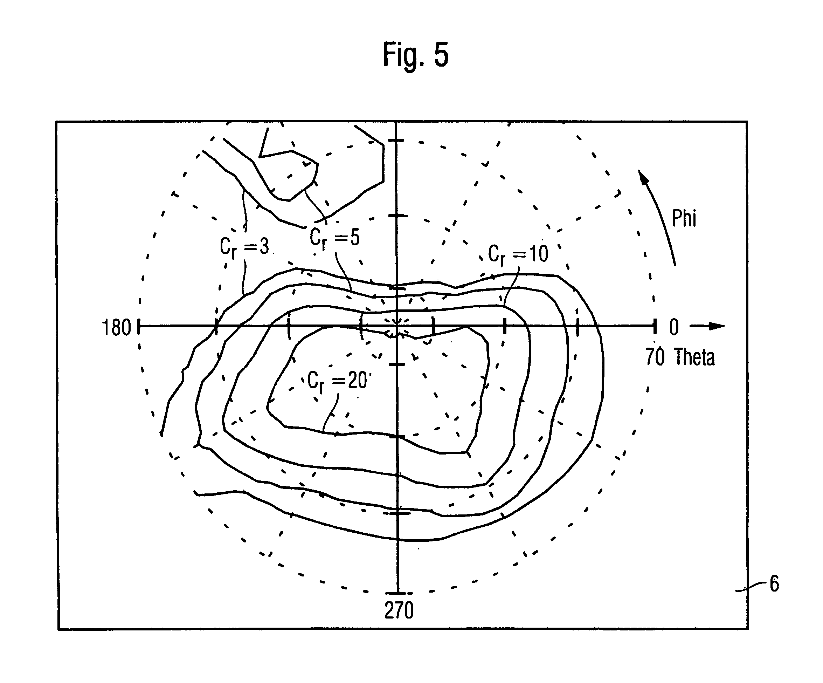

Um eine weitere Eingrenzung der emittierenden Lichtstrahlen der Anzeigevorrichtung 3 zu erreichen, ist im Falle des vorliegenden Ausführungsbeispiels die Anzeigeoberfläche des Flüssigkristallbildschirmes 6 durch eine entsprechende Reibrichtung der Orientierungsschicht so eingestellt, dass der Bereich des minimalen Kontrasts und der zugehörigen geringen Transmission in Richtung der Windschutzscheibe 2 ausgerichtet sind. Dies ist in der Fig. 5 für den Flüssigkristallbildschirm 6 dargestellt.

Obwohl die vorliegende Erfindung anhand eines bevorzugten Ausführungsbeispieles beschrieben wurde, ist die Erfindung nicht auf diese beschränkt, sondern auf vielfältige Weise modifizierbar. Insbesondere kann anstelle des in der Fig. 4 gezeigten Reflektors 9 die Anzeigevorrichtung 3 insbesondere auch mit einem in der Fig. 6 gezeigten Reflektor 9' ausgestattet sein. Der Reflektor 9' umfasst eine Vielzahl von Partialflächen 20, die sägezahnartig auf der dem Lichtleiter 7 zugewandten Seite ausgerichtet sind. Die Partialflächen 20 sind zur dem Reflektor 9' zugewandten Seite des Lichtleiters 7 mit einem spitzen Winkel d3' ausgerichtet.

### Bezugszeichenliste

- 1: Armaturenbrett
- 2: Windschutzscheibe
- 3: Anzeigevorrichtung
- 4, 5: Teilgehäuse
- 6: Flüssigkristallbildschirm
- 7: Lichtleiter
- 8: Leuchtdioden
- 9, 9': Reflektor
- 10: Ellipse
- 11: Prismen
- 12, 13: Seitenfläche
- 14: Fläche
- 15: Seite
- 16: Bereich
- 17: Fläche
- 18: Grenzbereich
- 19: Formhimmel
- 20: Partialflächen

- d1, d2, d3, d3': Winkel
- α: Austrittswinkel
- PKW: Personenkraftwagen

## Patentansprüche

1. Kraftfahrzeug, aufweisend eine Windschutzscheibe (2), eine Anzeigevorrichtung (3) mit einer Anzeige (6) und einer die Anzeige (6) hinterleuchtenden, Leuchtmittel (8) umfassenden Hintergrundbeleuchtung und ein im Wesentlichen hutzenloses Armaturenbrett (1), an dem die Anzeigevorrichtung (3) ohne einer die Anzeigevorrichtung (3) in Richtung der Windschutzscheibe (2) abschottenden optischen Blende angeordnet ist, **dadurch gekennzeichnet, dass** die Hintergrundbeleuchtung neben den Leuchtmittel (8) einen an der Rückseite der Anzeige (6) angeordneten flächenhaften Lichtleiter (7), in den die Leuchtmittel (8) Licht einkoppeln, aufweist, und dass die der Rückseite der Anzeige (6) zugewandte Seite des Lichtleiters (7) eine asymmetrische Mikrostruktur (11) aufweist, die das für das Hinterleuchten der Anzeige (6) vorgesehene Licht in eine definierte Vorzugsrichtung lenkt, die in Richtung eines Bereichs (10) gerichtet ist, in dem sich die Augenellipsen von das Kraftfahrzeug lenkenden Personen befinden, sodass das für das Hinterleuchten der Anzeige (6) vorgesehene Licht keinen Anteil in Richtung der Windschutzscheibe (2) des Kraftfahrzeugs aufweist.

2. Kraftfahrzeug nach Anspruch 1, bei dem die Mikrostruktur (11) des Lichtleiters (7) prismenförmig ausgebildet ist.

3. Kraftfahrzeug nach Anspruch 1 oder 2, dessen Anzeigevorrichtung (3) einen flächenhaften Reflektor (9, 9') aufweist, der an der der Rückseite der Anzeige (6) abgewandten Seite des Lichtleiters (7) derart angeordnet und/oder ausgebildet ist, dass er vom Lichtleiter (7) reflektierendes Licht weg von der Windschutzscheibe (2) in den Lichtleiter (7) zurückwirft.

4. Kraftfahrzeug nach Anspruch 3, bei dem die dem Lichtleiter (7) zugewandte Fläche (15) des Reflektors (9) plan ist und mit der der Rückseite der Anzeige (6) abgewandten Seite des Lichtleiter (7) einen spitzen Winkel (d3) einschließt.

5. Kraftfahrzeug nach Anspruch 3, bei dem die dem Lichtleiter (7) zugewandte Fläche (15) des Reflektors (9') Partialflächen (20) aufweist, die jeweils mit der der Rückseite der Anzeige (6) abgewandten Seite des Lichtleiters (7) einen spitzen Winkel (d3`) einschließen.

6. Kraftfahrzeug nach einem der Ansprüche 1 bis 5, bei dem die Transmissionseigenschaft der Anzeige (6) durch eine Reibrichtung ihrer Oberfläche derart ausgerichtet ist, dass der Bereich des minimalen Kontrasts und der zugehörigen Transmission in Richtung der Windschutzscheibe (2) ausgerichtet ist.

7. Anzeigevorrichtung zum Einbau in ein Armaturenbrett (1) eines Kraftfahrzeugs, aufweisend eine Anzeige (6) und eine die Anzeige (6) hinterleuchtende Hintergrundbeleuchtung mit Leuchtmitteln (8), **gekennzeichnet durch** einen an der Rückseite der Anzeige (6) angeordneten flächenhaften Lichtleiter (7), in den die Leuchtmittel (8) Licht einkoppeln, wobei die der Rückseite der Anzeige (6) zugewandte Seite des Lichtleiters (7) eine asymmetrische Mikrostruktur (11) aufweist, die das für das Hinterleuchten der Anzeige (6) vorgesehene Licht im eingebauten Zustand der Anzeigevorrichtung (3) im Armaturenbrett (1) des Kraftfahrzeugs in eine definierte Vorzugsrichtung lenkt, die in Richtung eines Bereichs (10) gerichtet ist, in dem sich die Augenellipsen von das Kraftfahrzeug lenkenden Personen befinden, sodass das für das Hinterleuchten der Anzeige (6) vorgesehene Licht im eingebauten Zustand der Anzeigevorrichtung (3) im Armaturenbrett (1) des Kraftfahrzeugs keinen Anteil in Richtung der Windschutzscheibe (2) des Kraftfahrzeugs aufweist.

8. Anzeigevorrichtung nach Anspruch 7, bei der die Mikrostruktur (11) des Lichtleiters (7) prismenförmig ausgebildet ist.

9. Anzeigevorrichtung nach Anspruch 7 oder 8, die einen flächenhaften Reflektor (9, 9') aufweist, der an der der Rückseite (15) der Anzeige (6) abgewandten Seite des Lichtleiters (7) derart angeordnet und/oder ausgebildet ist, dass er vom Lichtleiter (7) reflektierendes Licht weg von der Windschutzscheibe (2) in den Lichtleiter (7) zurückwirft.

10. Anzeigevorrichtung nach Anspruch 9, bei der die dem Lichtleiter (7) zugewandte Fläche des Reflektors (9) plan ist und mit der der Rückseite der Anzeige (6) abgewandten Seite des Lichtleiters (7) einen spitzen Winkel (d3) einschließt.

11. Anzeigevorrichtung nach Anspruch 9, bei der die dem Lichtleiter (7) zugewandte Fläche des Reflektors (9') Partialflächen (P) aufweist, die jeweils mit der der Rückseite (15) der Anzeige (6) abgewandten Seite des Lichtleiters (7) einen spitzen Winkel (d3') einschließen.

12. Anzeigevorrichtung nach einem der Ansprüche 7 bis 11, bei der die Transmissionseigenschaft der Anzeige (6) durch eine Reibrichtung ihrer Oberfläche derart ausgerichtet ist, dass der Bereich des minimalen Kontrasts und der zugehörigen Transmission in Richtung der Windschutzscheibe (2) ausgerichtet ist.

## Claims

1. A motor vehicle, comprising a windscreen (2), a display apparatus (3) with a display (6) and a backlight which backlights the display and comprises a lighting device (8), and a substantially cowl-free dashboard (1) on which the display apparatus (3) is arranged without an optical stop sealing the display apparatus in the direction of the windscreen (2), **characterized in that** in addition to the lighting devices (8) the backlight comprises a planar light guide (7) arranged on the rear side of the display (6) into which the lighting devices (8) inject light, and that the side of the light guide (7) facing the rear side of the display (6) has an asymmetrical microstructure (11) which guides the light intended for backlighting the display (6) to a defined preferred direction which is directed in the direction of a region in which the eye ellipses of persons steering the motor vehicle are disposed, so that the light intended for backlighting the display (6) has no share in the direction of the windscreen (2) of the motor vehicle.

2. A motor vehicle according to claim 1, wherein the microstructure (11) of the light guide (7) is arranged in a prismatic manner.

3. A motor vehicle according to claim 1 or 2, whose display apparatus (3) comprises a planar reflector (9, 9') which is arranged and/or configured on the side of the light guide (7) averted from the rear side of the display (6) in such a way that it reflects light reflected by the light guide (7) away from the windscreen (2) back into the light guide (7).

4. A motor vehicle according to claim 3, wherein the surface (15) of the reflector (9) facing the light guide (7) is planar and with which it encloses an acute angle (d3) with the side of the light guide (7) averted from the rear side of the display (6).

5. A motor vehicle according to claim 3, wherein the surface (15) of the reflector (9') which faces the light guide (7) comprises partial areas (20) which each enclose an acute angle (d3') with the side of the light guide (7) averted from the rear side of the display (6).

6. A motor vehicle according to one of the claims 1 to 5, wherein the transmission property of the display (6) is aligned by a frictional direction of its surface in such a way that the region of minimal contrast and the associated transmission is aligned in the direction of the windscreen (2) .

7. A display apparatus for installation in a dashboard (1) of a motor vehicle, comprising a display (6) and a backlight which backlights the display and comprises lighting devices (8), **characterized by** a planar light guide (7) which is arranged on the rear side of the display (6) and into which the light devices (8) inject light, with the side of the light guide (7) facing the rear side of the display (6) having an asymmetrical microstructure (11) which guides the light intended for backlighting the display (6) in a defined preferred direction in the installed state of the display apparatus (3) in the dashboard (1) of the motor vehicle, which light is directed in the direction of a region (10) in which the eye ellipses of persons steering the motor vehicle are disposed, so that the light intended for backlighting the display (6) has no share in the direction of the windscreen (2) of the motor vehicle in the installed state of the display apparatus (3) in the dashboard of the motor vehicle.

8. A display apparatus according to claim 7, wherein the microstructure (11) of the light guide (7) is arranged in a prismatic way.

9. A display apparatus according to claim 7 or 8, comprising a planar reflector (9, 9') which is arranged and/or configured on the side of the light guide (7) averted from the rear side (15) of the display (6) in such a way that it reflects light reflected by the light guide (7) away from the windscreen (2) back into the light guide (7).

10. A display apparatus according to claim 9, wherein the surface of the reflector (9) facing the light guide (7) is planar and with which it encloses an acute angle (d3) with the side of the light guide (7) averted from the rear side of the display (6).

11. A display apparatus according to claim 9, wherein the surface of the reflector (9') which faces the light guide (7) comprises partial areas (P) which each enclose an acute angle (d3') with the side of the light guide (7) averted from the rear side (15) of the display (6).

12. A display apparatus according to one of the claims 7 to 11, wherein the transmission property of the display (6) is aligned by a frictional direction of its surface in such a way that the region of minimal contrast and the associated transmission is aligned in the direction of the windscreen (2) .

## Revendications

1. Véhicule à moteur présentant un pare-brise (2), un dispositif d'affichage (3) avec un afficheur (6) et un éclairage d'arrière-plan comprenant des lampes (8) qui éclaire l'afficheur (6) par derrière, et un tableau de bord (1) sensiblement sans trappe d'air, sur lequel le dispositif d'affichage (3) est disposé sans volet optique isolant le dispositif d'affichage (3) dans la direction du pare-brise (2), **caractérisé en ce que** l'éclairage d'arrière-plan comprend, outre les lampes (8), un guide d'ondes lumineuses (7) plan disposé sur la face arrière de l'afficheur (6), dans lequel les lampes (8) font entrer de la lumière, et **en ce que** la face du guide d'ondes lumineuses (7) tournée vers la face arrière de l'afficheur (6) présente une microstructure asymétrique (11) qui guide la lumière destinée à l'éclairage d'arrière-plan de l'afficheur (6) dans une direction préférentielle définie, qui est dirigée vers une zone (10) dans laquelle se trouvent les ellipses oculaires d'une personne conduisant le véhicule, de sorte que la lumière destinée à l'éclairage d'arrière-plan de l'afficheur (6) ne contient pas de composante allant en direction du pare-brise (2) du véhicule à moteur.

2. Véhicule à moteur selon la revendication 1, dans lequel la microstructure (11) du guide d'ondes lumineuses (7) a une forme prismatique.

3. Véhicule à moteur selon la revendication 1 ou 2, dont le dispositif d'affichage (3) présente un réflecteur plan (9, 9') qui est disposé sur la face du guide d'ondes lumineuses (7) opposée à la face arrière de l'afficheur (6) de telle manière et/ou est conformé de telle manière qu'il renvoie la lumière réfléchie par le guide d'ondes lumineuses (7) dans le guide d'ondes lumineuses (7) en l'éloignant du pare-brise (2).

4. Véhicule à moteur selon la revendication 3, dans lequel la surface (15) du réflecteur (9) orientée vers le guide d'ondes lumineuses (7) est plane et forme un angle aigu (d3) avec la face du guide d'ondes lumineuses (7) dirigée vers la face arrière de l'afficheur (6).

5. Véhicule à moteur selon la revendication 3, dans lequel la surface (15) du réflecteur (9') orientée vers le guide d'ondes lumineuses (7) comporte des surfaces partielles (20) qui forment chacune avec la face du guide d'ondes lumineuses (7) dirigée vers la face arrière de l'afficheur (6) un angle aigu (d3').

6. Véhicule à moteur selon l'une des revendications 1 à 5, dans lequel la propriété de transmission de l'afficheur (6) est orientée par un sens de frottement de sa surface de telle façon que la zone de contraste minimum et de transmission correspondante est orientée en direction du pare-brise (2).

7. Dispositif d'affichage à monter dans un tableau de bord (1) d'un véhicule à moteur, présentant un afficheur (6) et un éclairage d'arrière-plan éclairant l'afficheur (6) par l'arrière avec des lampes (8), **caractérisé en ce qu'**il comporte un guide d'ondes lumineuses (7) plan disposé sur la face arrière de l'afficheur (6) dans lequel les lampes (8) font entrer de la lumière, la face du guide d'ondes lumineuses (7) dirigée vers la face arrière de l'afficheur (6) ayant une microstructure asymétrique (11) qui dirige la lumière destinée à l'éclairage d'arrière-plan de l'afficheur (6), dans l'état monté du dispositif d'affichage (3) dans le tableau de bord (1) du véhicule à moteur, dans une direction préférentielle définie qui est dirigée vers une zone (10) dans laquelle se trouvent les ellipses oculaires d'une personne conduisant le véhicule, de sorte que la lumière destinée à l'éclairage d'arrière-plan de l'afficheur (6), dans l'état monté du dispositif d'affichage (3) dans le tableau de bord (1) du véhicule à moteur, ne contient pas de composante allant en direction du pare-brise (2) du véhicule à moteur.

8. Dispositif d'affichage selon la revendication 7, dans lequel la microstructure (11) du guide d'ondes lumineuses (7) a une forme prismatique.

9. Dispositif d'affichage selon la revendication 7 ou 8, qui présente un réflecteur plan (9, 9') qui est disposé sur la face du guide d'ondes lumineuses (7) opposée à la face arrière (15) de l'afficheur (6) de telle manière et/ou est conformé de telle manière qu'il renvoie la lumière réfléchie par le guide d'ondes lumineuses (7) dans le guide d'ondes lumineuses (7) en l'éloignant du pare-brise (2).

10. Dispositif d'affichage selon la revendication 9, dans lequel la surface du réflecteur (9) orientée vers le guide d'ondes lumineuses (7) est plane et forme avec la face du guide d'ondes lumineuses (7) dirigée vers la face arrière de l'afficheur (6) un angle aigu (d3).

11. Dispositif d'affichage selon la revendication 9, dans lequel la surface du réflecteur (9') orientée vers le guide d'ondes lumineuses (7) comporte des surfaces partielles (P) qui forment chacune un angle aigu (d3') avec la face du guide d'ondes lumineuses (7) dirigée vers la face arrière (15) de l'afficheur (6).

12. Dispositif d'affichage selon l'une des revendications 7 à 11, dans lequel la propriété de transmission de l'afficheur (6) est orientée par un sens de frottement de sa surface de telle façon que la zone de contraste minimum et de transmission correspondante est orientée en direction du pare-brise (2).
